# EUROPEAN PATENT APPLICATION

(11) **EP 1 876 598 A2**
(43) Date of publication of application: **09.01.2008**
(21) Application number: 07117496.5
(22) Date of filing: 11.10.2003
(51) Int. Cl.: G11B 27/10, G11B 27/034

(54) **Method and apparatus for managing animation data of an interactive DVD.**

(30) Priority: 29.01.2003 US 443292 P; 07.03.2003 KR 20030014457
(62) Divisional of application: 03751515.2
(71) Applicant: LG Electronics Inc., Seoul, 150-721 (KR)
(72) Inventor: Alexandre, Limonov, Seoul 137-784 (KR); Lee, Seung Hoon, Kyunggi-do 463-010 (KR); Yoo, Jea Yong, Seoul 135-270 (KR); Yoon, Woo Seong, Kyonggi-do 472-744 (KR)
(74) Representative: Vossius & Partner

(57) **Abstract**

A method for reproducing animation data using an enhanced navigation player is provided. The method comprises receiving first graphic information comprising control data and animation data associated with audio/video (A/V) data read from a first source; extracting from the first graphic information, second and third graphic information; decoding the second and third graphic in formation into first and second image data, respectively; and reproducing at least one of the first and second image data in the form of animated images, based on the control data.

## Description

### 1. TECHNICAL FIELD

The present invention relates generally to a method and apparatus for managing animation data of an interactive optical disc, and more particularly to a method and apparatus for managing animation data for use in enhanced navigation mediums, such as an interactive optical disc (for example, IDVD (Interactive Digital Versatile Disc or Enhanced Digital Versatile Disc - eDVD)) in such a way that it can reproduce various animation data associated with audio/video (A/V) data.

### 2. BACKGROUND ART

High-density optical discs (e.g., DVDs) are capable of recording and storing digital data. The DVDs are high-capacity recording mediums capable of permanently recording and storing not only high-quality digital audio data, but also high-quality moving picture data.

A DVD includes a data stream recording area for recording (1) digital data streams such as moving picture data and (2) navigation data recording area for recording navigation data needed for controlling playback of the moving picture data.

Thus, a general DVD player first reads the navigation data recorded on the navigation data recording area if the DVD is seated in the player, stores the read navigation data in a memory provided in the player, and reproduces the moving picture data recorded on the data stream recording area using the navigation data. The DVD player reproduces the moving picture data recorded on the DVD, such that a user can see and hear a movie recorded on the DVD.

Additional information associated with the playback of audio/video (A/V) data can be recorded on a DVD. This information may include, document-type content file (e.g. , an HTML (HyperText Markup Language), a SMIL (Synchronized Multimedia Integration Language), a CSS (Cascading Style Sheet), a scripting language (i.e., ECMAScript)), a data-type content file (e.g., image data (e.g., JPEG or PNG), audio data (e.g., AC-3, MPEG audio, DTS, or SDDS), animation data (e.g., NNG)) and text/font data.

Standardization of an interactive digital versatile disc (I-DVD) is ongoing. The A/V data recorded on the I-DVD is reproduced according to the user's interactive request. Where I-DVDs are commercialized, the supply of various contents, associated with the main A/V data, through digital recording mediums will be more prevalent, resulting in greater convenience to the user.

A method for receiving/reading the above-identified various contents files from a content server while simultaneously reproducing the main A/V data recorded on DVDs are being implemented. An effective method for reproducing the main A/V data and its related contents such as various animation data upon receiving a user's request is needed.

### 3. DISCLOSURE OF INVENTION

In accordance with one or more embodiments of the invention, a method for reproducing animation data using an enhanced navigation player is provided. The method comprises receiving first graphic information comprising control data and animation data associated with audio/video (A/V) data read from a first source; extracting from the first graphic information, second and third graphic information; decoding the second and third graphic information into first and second image data, respectively; and reproducing at least one of the first and second image data in the form of animated images, based on the control data.

In one embodiment, the first control data is extracted from the first graphic information, the second control data is extracted from the second graphic information, and third control data is extracted from the third graphic information. In some embodiments, the first graphic information is a MNG (Multimedia Network Graphics) file; the second graphic information is a PNG (Portable Network Graphics) file, and the third graphic information is a JNG (JPEG Network Graphics) file, for example.

The first control data comprises MNG (Multimedia Network Graphics) control information. The second control data comprises PNG (Portable Network Graphics) control information. The third control data comprises JNG (JPEG Network Graphics) control information.

In one embodiment, the method for reproducing animation data further comprises extracting first control data from the first graphic information; extracting second control data from the second graphic information; and extracting third control data from the third graphic information, wherein the control data comprises first, second and third control information.

The first control data comprises MNG (Multimedia Network Graphics) control information; the second control data comprises PNG (Portable Network Graphics) control information; and the third control data comprises JNG (JPEG Network Graphics) control information, for example. In certain embodiments, the first graphic information is a MNG (Multimedia Network Graphics) file; the second graphic information is a PNG (Portable Network Graphics) file; and the third graphic information is a JNG (JPEG Network Graphics) file.

In accordance with another embodiment, a method for reproducing animation data using an enhanced navigation player is provided. The method comprises receiving first graphic information comprising control data and animation data associated with audio/video (A/V) data read from a first source; storing the first graphic information in a storage medium; extracting from the first graphic information, second and third graphic information; decoding the second and third graphic information into first and second image data, respectively; extracting first, second and third control data from the first, second and third graphic information, respectively; and reproducing at least one of the first and second image data in the form of animated images, based on the control data.

In certain embodiments, control data comprises first, second and third control data, wherein the first control data comprises MNG (Multimedia Network Graphics) control information, the second control data comprises PNG (Portable Network Graphics) control information, and the third control data comprises JNG (JPEG Network Graphics) control information.

The first graphic information is a MNG (Multimedia Network Graphics) file; the second graphic information is a PNG (Portable Network Graphics) file; and the third graphic information is a JNG (JPEG Network Graphics) file. In one embodiment, the first source is an enhanced navigation medium. In other embodiments, the first source is a content server. In one or more embodiments, the storage medium is a temporary storage medium. The first source can be an interactive digital versatile disc (I-DVD).

The first graphic information comprises MNG (Multimedia Network Graphics), PNG (portable Network Graphics) and JNG (JPEG Network Graphics) data chunks, for example. In one or more embodiments, the MNG data chunk comprises MNG header information and MNG end information, and control information for reproducing animated images. The PNG data chunk comprises PNG header information, PNG end information, object image data, and control information for controlling playback of the object image data, for example.

The JNG data chunk comprises JNG header information, JNG end information, JPEG image data, and control information for controlling playback of the JPEG image data. The JPEG image data comprises multidimensional density attributes for defining aspect/ratio conversions for image data displayed on a display device, based on the display device dimensions. The multidimensional density attributes comprise a horizontal pixel density X, for example, in certain embodiments. The multidimensional density attributes comprise a vertical pixel density Y.

In one or more embodiments, an enhanced navigation player for reproducing animation data comprises a first decoder for receiving first graphic information comprising control data and animation data associated with audio/video (A/V) data read from a first source; a second decoder for extracting second graphic information in form of first decoded image data from the first graphic information; a parser for extracting third graphic information in form of second image data from the first graphic information; a third decoder for decoding the third graphic information into second decoded image data; and an image manager for receiving the first and second decoded image data and reproducing animated images, based on the control data.

The first decoder, the second decoder and the parser, respectively extract first, second and third control information from respectively the first, second and third graphic information. The first control data comprises MNG (Multimedia Network Graphics) control information, the second control data comprises PNG (Portable Network Graphics) control information, and the third control data comprises JNG (JPEG Network Graphics) control information. The first graphic information is a MNG (Multimedia Network Graphics) file; the second graphic information is a PNG (Portable Network Graphics) file; and the third graphic information is a JNG (JPEG Network Graphics) file.

In some embodiments, the first source is an enhanced navigation medium, a content server, or an interactive digital versatile disc (I-DVD) . A storage medium for temporarily storing first graphic information received by the first decoder can be also provided.

In one embodiment, the first graphic information comprises MNG (Multimedia Network Graphics), PNG (Portable Network Graphics) and JNG (JPEG Network Graphics) data chunks. The MNG data chunk comprises MNG header information and MNG end information, and control information for reproducing animated images. The PNG data chunk comprises PNG header information, PNG end information, object image data, and control information for controlling playback of the object image data.

The JNG data chunk comprises JNG header information, JNG end information, JPEG image data, and control information for controlling playback of the JPEG image data. The JPEG image data comprises multidimensional density attributes for defining aspect/ratio conversions for image data displayed on a display device, based on the display device dimensions, for example.

In another embodiment, an enhanced navigation player for reproducing animation data comprises a MNG decoder for receiving MNG graphic information comprising control data and animation data associated with audio/video (A/V) data read from at least one of an enhanced navigation medium and a content server; a PNG decoder for extracting PNG graphic information in form of first decoded image data from the first graphic information; a JNG parser for extracting JNG graphic information in form of JPEG image data from the MNG graphic information; a JPEG decoder for decoding the JNG graphic information into second decoded image data; and a MNG layout manager for receiving the first and second decoded image data and reproducing animated images, based on the control data.

The MNG decoder, the PNG decoder and the JNG parser, respectively extract MNG, PNG and JNG control information from respectively the MNG, PNG and JNG graphic information, in accordance with one or more embodiments.

In yet another embodiment, an enhanced navigation medium comprises audio/visual (A/V) data; navigation data for controlling reproduction of the A/V data by an enhanced navigation player; and structural configuration for packaging the A/V and control data, wherein the structural configuration comprises a data frame comprising an MNG (Multimedia Network Graphics)file having animation information. The MNG file comprises MNG chunk data; and at least one of PNG (Portable Network Graphics) chunk data and JNG (JPEG Network Graphics) chunk data.

The enhanced navigation medium, wherein the MNG chunk data comprises: a MNG header frame identifier; a MNG end frame identifier; and MNG control information. In certain embodiments, an enhanced navigation data structure for packaging animation data for reproduction by an enhanced navigation player, the data structure comprising an MNG file comprises a audio/visual (A/V) data; navigation data for controlling reproduction of the A/V data by an enhanced navigation player.

The A/V data and the navigation data can be packaged into MNG (Multimedia Network Graphics) chunk data; and at least one of PNG (Portable Network Graphics) chunk data and JNG (JPEG Network Graphics) chunk data. The MNG chunk data comprises a MNG header frame identifier; a MNG end frame identifier; and MNG control information. The PNG chunk data comprises a PNG header frame identifier; a PNG end frame identifier; and PNG control information.

In accordance with another embodiment, an enhanced navigation data structure is provided wherein the JNG chunk data comprises a JNG header frame identifier; a JNG end frame identifier; and JNG control information.

These and other embodiments of the present invention will also become readily apparent to those skilled in the art from the following detailed description of the embodiments having reference to the attached figures, the invention not being limited to any particular embodiments disclosed.

### 4. BRIEF DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.
Fig. 1 is a block diagram illustrating an interactive disc player for managing animation data and its attribute information for use in an interactive optical disc, in accordance with one embodiment of the present invention;
Fig. 2 is a diagram illustrating a method for reproducing the A/V data recorded on I-DVDs to be associated with animation data, in accordance with one embodiment of the present invention;
Fig. 3 is an exemplary graphic file configuration of animation data, in accordance with one embodiment of the invention;
Fig. 4 is a block diagram of an animation decoder in an element decoder of Fig. 1, illustrating the interactive disc player, in accordance with one embodiment of the invention;
Figs. 5, 6 and 7 show exemplary data structures for a graphic file configuration, respectively;
Figs. 8 and 9 show examples of another graphic file configuration, respectively; and

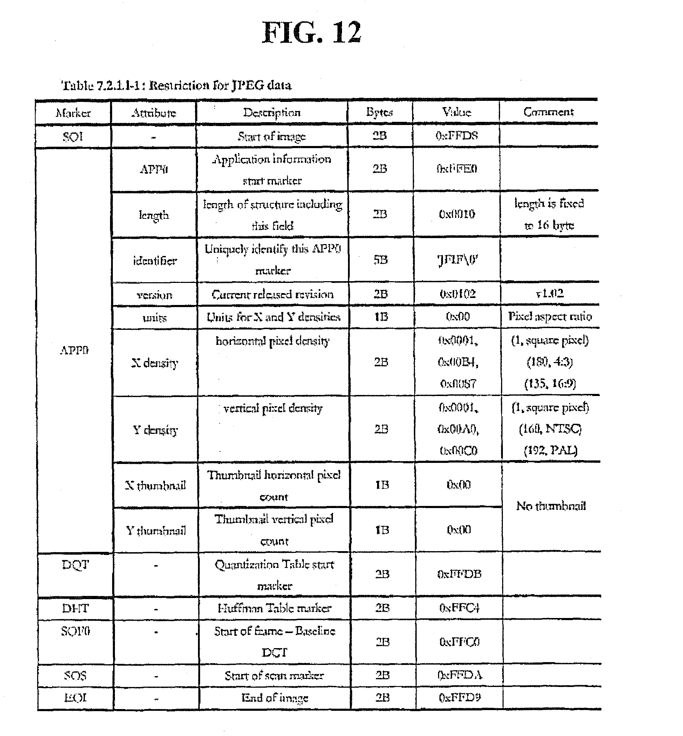

Figs. 10, 11, and 12 show examples of yet another graphic file configuration, in accordance with one or more embodiments of the invention.

Features, elements, and aspects of the invention that are referenced by the same numerals in different figures represent the same, equivalent, or similar features, elements, or aspects in accordance with one or more embodiments of the system.

### 5. MODES FOR CARRYING OUT THE INVENTION

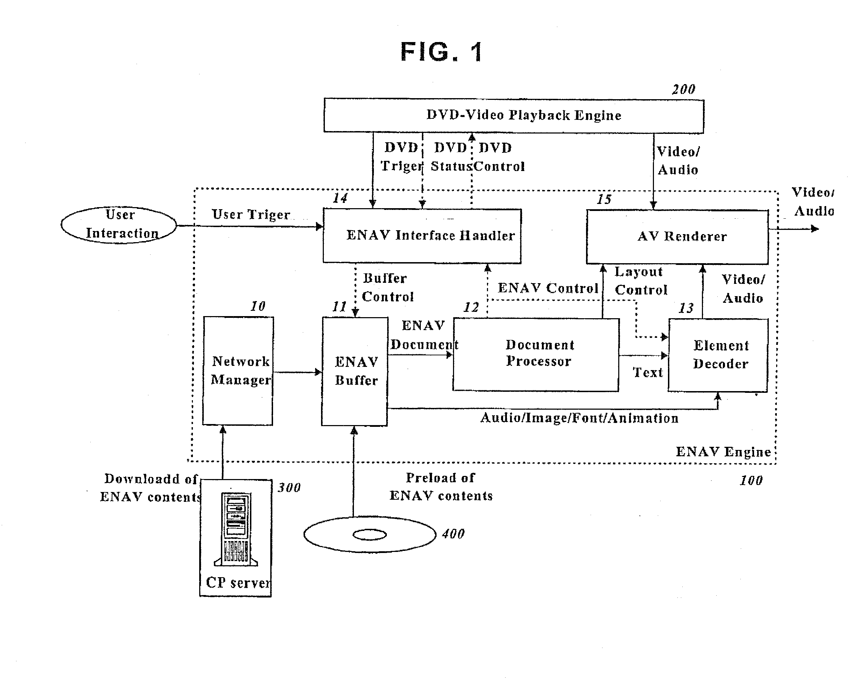

Referring to Fig. 1, an enhanced navigation player, or an interactive disc player such as an ENAV or I-DVD player is provided. One or more embodiments of the invention are described in association with an I-DVD or enhanced navigation (ENAV) disc or disc player. It should be understood that this association is by way of example. Thus, systems and methods provided herein, may be applicable to any type of recording medium or content player device.

The interactive disc player such as an I-DVD player of Fig. 1 comprises an ENAV engine 100. The ENAV engine 100 comprises a network manager 10 for downloading ENAV contents from a content server 300 connected to a network, a ENAV buffer 11 for preloading ENAV contents recorded on a content disc 400 (e.g., I-DVD). A document processor 12 for receiving ENAV documents, and performing data processing operations relating to the ENAV documents can be also included.

An element decoder 13 for decoding text data and element data such as audio, image, font, and animation data using video or audio data, an ENAV interface handler 14 for controlling the ENAV buffer 11, performing requisite operations associated with a control signal received from the document processor 12, and receiving/transmitting a user trigger signal, DVD trigger signal, a DVD status signal, and a DVD control signal; and an AV renderer 15 for outputting audio and video signals, for example, may be also included in one or more embodiments.

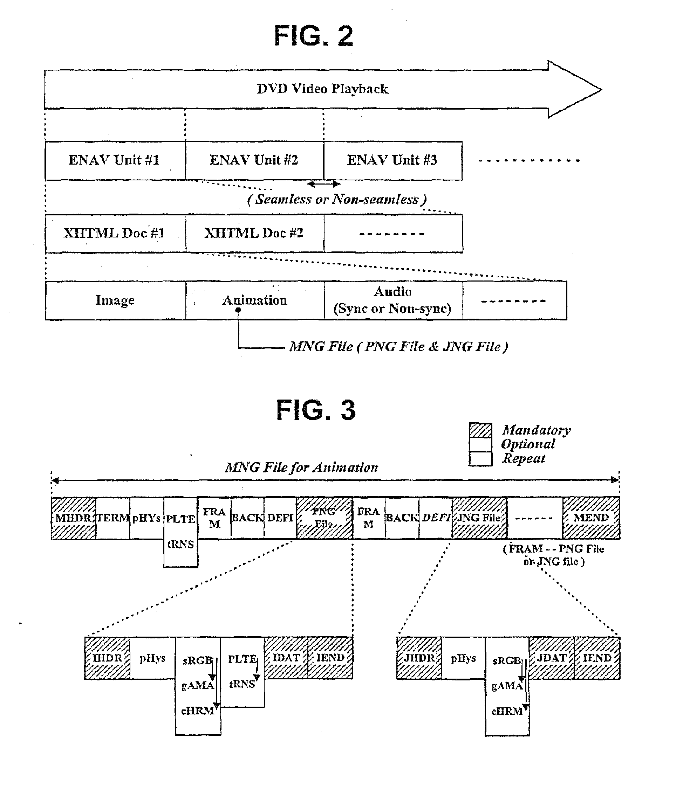

The ENAV engine 100 is connected to a DVD-Video playback engine 200. A content server 300 is connected to the network manager 10 and transmits a variety of contents data associated with A/V data recorded on the I-DVD 400, in the form of a plurality of data files. For example, as shown in Fig. 2, the ENAV content data can be transmitted on the basis of XHTML document file units and their related ENAV units composed of image, animation, audio or text/font data.

The animation data can be transmitted as a MNG (Multimedia Network Graphics) file, for example, written in a data format. The MNG file of the animation data can further include a PNG (Portable Network Graphics) file or a JNG (JPEG Network Graphics) file, for example.

Referring to Fig. 3, a MNG chunk data configuration and PNG and JNG chunk data configurations are provided. MNG header information (MHDR) is recorded on the head of the MNG file, for example. MNG end information (MEND) is recorded on the rear end of the MNG file. A PNG file and a JNG file of image data are further recorded in the MNG file. Various control information (TERM, pHYs, etc.) for controlling playback of image data of the PNG and JNG files can be selectively recorded in the MNG file, in certain embodiments.

PNG header information (IHDR) is recorded on the head of the PNG file, and PNG end information (IEND) is recorded on the rear end of the PNG file. Object image data (IDAT) to be displayed in the form of an animation image, and control information (pHYs, sRGB, etc.) for controlling playback of the object image data (IDAT) can be selectively recorded in the PNG-file.

JNG header information (JHDR) can be recorded on the head of the JNG file, and JNG end information (IEND) may be recorded on the rear end of the JNG file. JPEG image data (JDAT) to be displayed in the form of an animation image, and control information (pHYs, sRGB, etc.) for controlling playback of the JPEG image data (JDAT) can be selectively recorded in the JNG file.

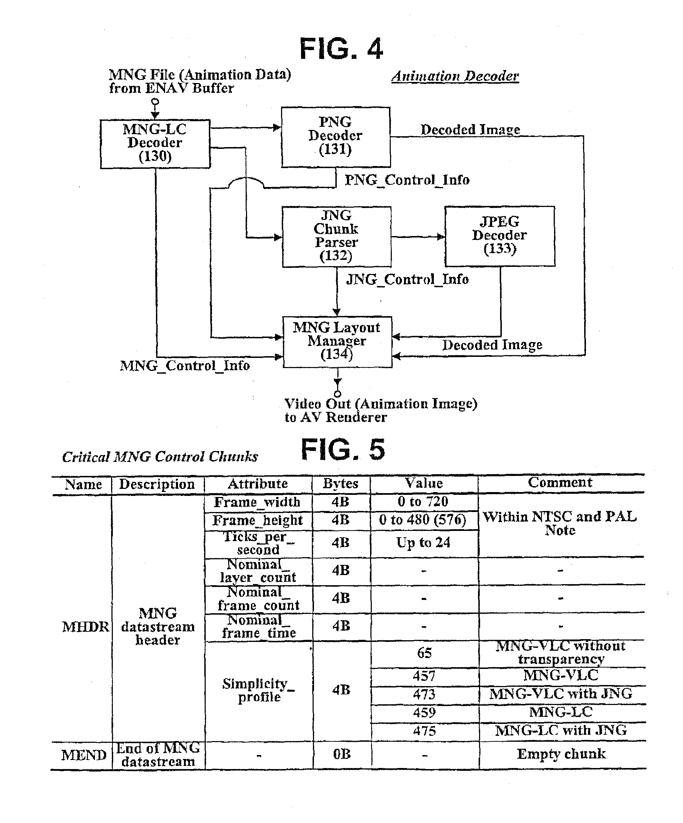

In one embodiment, the MNG file for animation data is received from the contents server 300, and is temporarily stored in the ENAV buffer 11. In other embodiments, the MNG file is read from a specified recording field of the 1-DVD 400, and is temporarily stored in the ENAV buffer 11. As shown in Fig. 4, the animation decoder contained in the element decoder 13 for reproducing data of the MNG file in the form of animation images can further comprise a MNG-LC decoder 130, a PNG decoder 131, a JNG chunk parser 132, a JPEG decoder 133, and a layout manager 134.

Therefore, the MNG file of animation data is read from the I-DVD 400 or the contents provider (CP) server 300, and is divided into the PNG file and the JNG file through the MNG-LC decoder 130. Control information contained in the MNG file is also divided into the PNG and JNG files, and is then outputted to the MNG layout manager 134, in accordance with one embodiment.

The PNG decoder 131, in some embodiments, decodes the PNG file. Control information contained in the PNG file and decoded object images are transmitted to the MNG layout manager 134. The JNG file is divided into control information and JPEG image data in the JNG chunk parser 132.

The control information of the KNG file is transmitted to the MNG layout manager 134. The JPEG image data is decoded as JPEG images in the JPEG decoder 133, and is then transmitted to the MNG layout manager 134. The JNG chunk parser 132 and the JPEG decoder 133 can be integrated as one body, in some embodiments. Control information and file division actions in the MNG-LC decoder 130, the PNG decoder 131, and the JNG chunk parser 132 are classified according to chunk data types, for example.

The MNG layout manager 134 refers to the MNG control information, the PNG control information, and the JNG control information, and reproduces the decoded object images and JPEG images in the form of animation images associated with the main A/V data reproduced by the DVD engine.

The interactive optical disc player is able to reproduce the main A/V data read from the I-DVD 400, and at the same time is able to reproduce the MNG file of animation data read from either the content server 300 or the I-DVD 400 in the form of animation images associated with the main A/V data.

A method for managing animation control information of the interactive optical disc in order to effectively record additional control information, needed for controlling playback of the aforementioned animation images, on the I-DVD will hereinafter be described in more detail. It is noteworthy that, the numeric values and parameter or file names provided here are by way of example, alternative numeric values or naming conventions can be used, in other embodiments and based on implementation.

Referring to Fig. 5, MNG header information (MHDR) corresponding to critical control chunks contained in the MNG file of the animation data comprises "Frame_width" information (e.g., 0 to 720) and "Frame_height" information (e.g., C to 480 (576)) for restricting a frame size, and "Ticks_per_second" information (e.g., up to 24) for limiting a frame rate.

Also, the MNG header information (MHDR) may further comprise "Nominal_layer_count" information, "Nominal_frame_count" information, "Nominal_layer_count" information, and "Simplicity_profile" information, for example. The MNG end information (MEND) for indicating the end of the MNG file is recorded as a prescribed comment "Empty chunk".

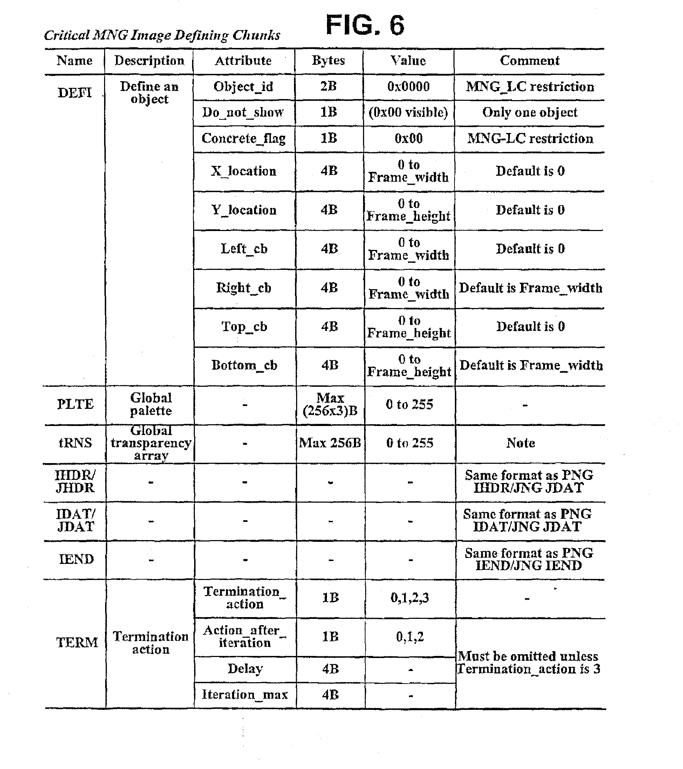

Referring to Fig. 6, DEFI (Define an object) information corresponding to Image Defining Chunks of the MNG file may include "Object_id" information, "Do_not_show" information, "Concrete_flag" information, "X_location" information, "Y_location" information, "Left_cb" information, "Right _cb" information, "Top_cb" information, and "Bottom_cb'' information, for example. If there is one object, the "Object_id" information and the "Concrete_flag" information are omitted, and the "Do_not_show" information is recorded as a prescribed value "0x00 visible", in accordance with one embodiment.

Information other than the "Right _cb" information and "Bottom_cb" information is recorded as a prescribed value "Default 0", for example. "PLTE" (Global palette) information includes specified information "max (256x3)B" used for indicating a number of R/G/B colors, for example. "tRNS" (Global transparency) information includes information for indicating transparency of R/G/B colors, for example.

The MNG file may further include IHDR/JHDR information, IDAT/JDAT information, and IEND information. "TERM" information comprises "Termination_action" information, "Action_after_iteration" information, "Delay" information, and "Iteration_max'" information. If the '''Termination_action" information is "0", it means the last display status of animation frames. If the "Termination_action" information is "1", it means that the animation frames automatically disappear after being completely displayed.

If the "Termination_action" information is "2", it means that the animation frames return to an initial frame status. If the "Termination_action" information is "3", it means that the animation frames begin their display action within the range from their first frame to their final frame, for example.

If the "Action_after_iteration" information is "0", it means the last display status of the animation frames, for example. If the "Action_after_iteration" information is "1", it means that the animation frames automatically disappear after being completely displayed, for example. If the "Action_after_iteration" information is "2", it means that the animation frames return to an initial frame status, for example.

The "Delay" information indicates an idle time period from one playback time to the next playback time. The "Iteration_max" information indicates a maximum value with which the animation frames can be repeatedly read. In the case of an infinite playback mode, the "Iteration_max" information is recorded as '0x7FFFFFF", for example.

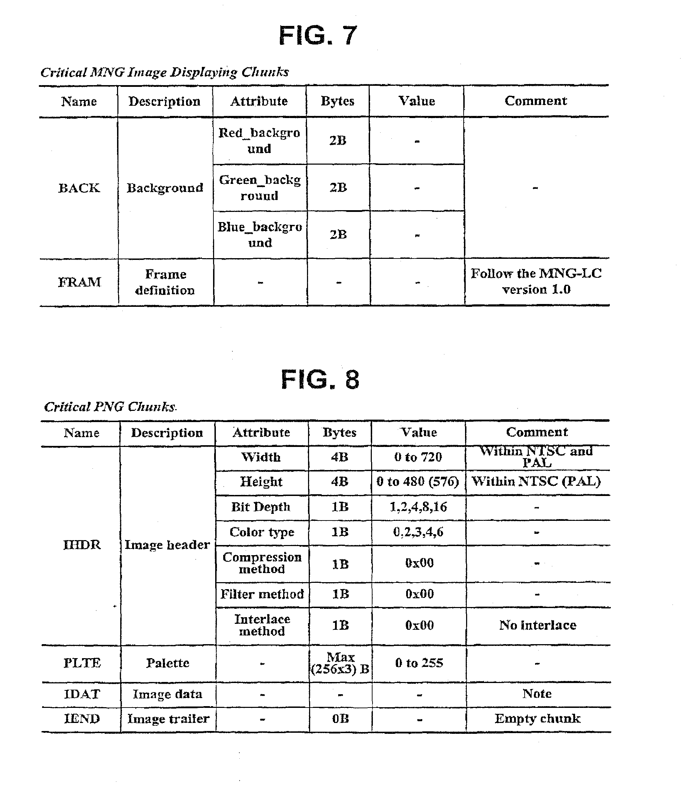

Referring to Fig. 7, "BACK" (Background) information corresponding to the Image Displaying Chunks of the MNG file and comprises "Red_background" information, "Green_background" information, and "Blue_background" information. The "BACK" information is adapted to set up a background color of the animation frame.

The "FRAM" (Frame definitions) information, for example, comprises "Frame_mode" information and "Sub_frame_name" information that are defined in the MNG-LC Version 1.0. "IHDR" (Image header) information corresponding to critical PNG chunks contained in the PNG file of animation data comprises "Width" information (e.g., 0 to 720) and "Height" information (e.g., 0 to 480 (576)) for restricting a width and height of a display screen of the I-DVD.

"Bit Depth" information, "Color type" information, "Compression method" information, "Filter method" information, and "Interlacing method" information may be also included in one or more embodiments. As for the "Bit depth" information, if the length of data adapted to display indexes of a palette is, for example, equal to value "8", 2⁸ data expressions is available such that 256 number of colors can be displayed.

The "Color type" information for displaying colors of images is based on a PNG format. The "Compression method" information and the "Filter method" information are not set to any function. The "Interlacing method" information is recorded as a specified value "0×00" not supporting an interlacing function.

The "PLTE" (Palette) information includes "max (256×3)B" information for respectively indicating a maximum 256 number of R/G/B colors. The "IDAT" (Image Data) information records real image data. The "IEND" information for indicating the end of PNG file is recorded as a prescribed comment "Empty chunk".

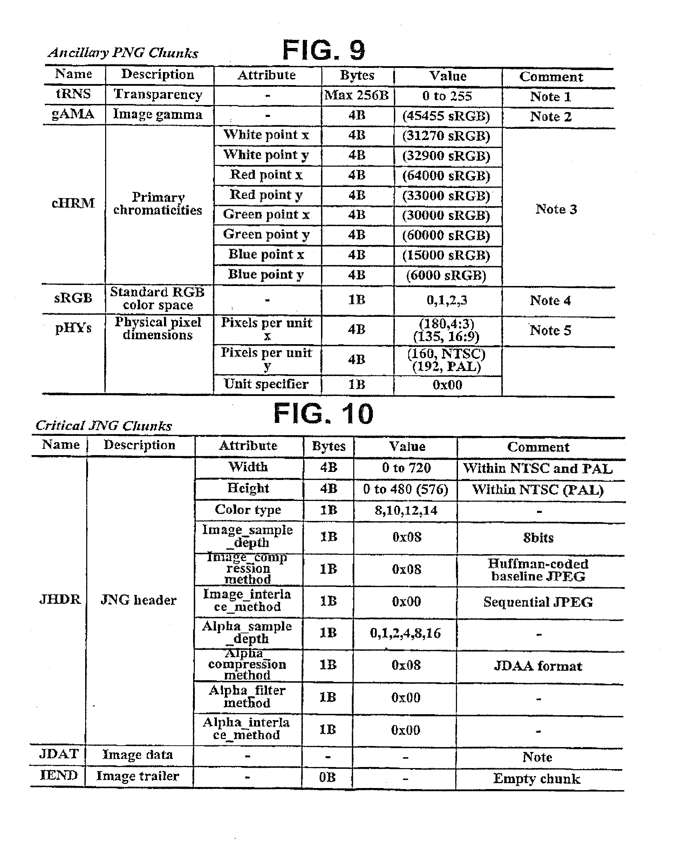

Referring to Fig. 9, "tRNS" (Transparency) information corresponding to ancillary PNG chunks of the PNG file includes "max 256B" information for indicating transparencies of, for example, 256 R/G/B colors. "gAMA" (Gamma) information comprises a fixed value, for example, "45455 sRGB" adapted to support the use of sRGB. Unless the sRGB is used, it is possible for the "gAMA" information to include another value instead of "454455 sRGB", for example.

The "cHRM" (Primary chromaticities) information may comprise "White point x" information, "White point y" information, "Red point x" information, "Red point y" information, "Green point x" information, "Green point y" information, "Blue point x" information, and "Blue point y" information.

The "cHRM" information may further comprise "sRGB" (Standard RGB color space) information and "pHYs" (Physical pixel dimensions) information. "Pixels per unit x" information recorded on the "pHYs" information indicates a display aspect ratio of, for example, 4:3 or 16:9. "Pixels per unit y" indicates a value indicating a NTSC or PAL, for example.

Referring to Fig. 10, "JHDR" (JNG header) information corresponding to critical JNG chunks contained in the JNG file of animation data comprises "Width" information (0 to 720) and "Height" information (e.g., 0 to 480 (576)) for restricting a width and height of a display screen, and also "Bit Depth" information, "Color type" information, "Image_sample_depth" information, "Image_compression method" information, and "Image_interlace_ method" information.

The "Image_sample_depth" information comprises a specified value, for example, "0x08" for limiting a bit size of image sample data of a JPEG file to, for example, 8 bits. The "Image_compression method" information is used for a JPEG compression of, for example, ISO 10918-1 Hoffman codes limited in I-DVDs. The "Image_interlace_method" information includes a specified value "0x00" for supporting a sequential compression.

The "JHDR" information may further comprise "Alpha_sample_depth" information, "Alpha_compression_method" information, "Alpha_filter_method" information, and the "Alpha _interlace_method" information, for example. The reference character "Alpha" is a transparency indicator, and the "Alpha_sample_depth" information is one alpha value, for example. Provided that the "Alpha_sample_depth" information is, for example, 4, 2⁴ alpha values can be created.

The "Alpha_interlace_method" information is recorded as a value "0×00", for example, not supporting an interlacing function. The "JDAT" (Image Data) information records real image data. The "IEND" information for indicating the end of JNG file is recorded as a prescribed comment "Empty chunk", for example.

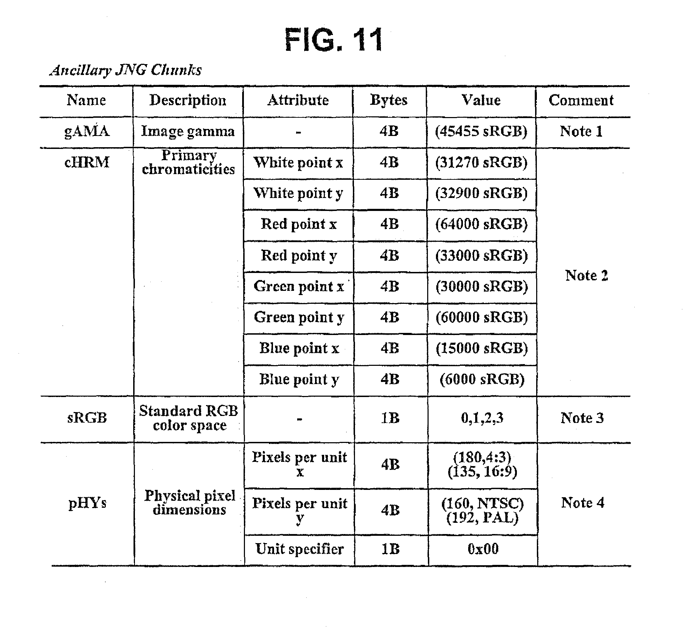

Referring to Fig. 11, "gAMA" (Gamma) information corresponding to ancillary JNG chunks of the JNG file includes a fixed value of, for example, "45455 sRGB" adapted to support the use of sRGB. The "cHRM" (Primary chromaticities) information comprises "White point x" information, "White point y" information, "Red point x" information, "Red point y" information, "Green point x" information, "Green point y" information, "Blue point x" information, and "Blue point y" information, for example.

The "cHRM" information further includes "sRGB" (Standard RGB color space) information and "pHYs" (Physical pixel dimensions) information. "Pixels per unit x" information recorded on the "pHYs" information indicates a display aspect ratio of 4:3 or 16:9, for example. "Pixels per unit y" indicates a value indicating a NTSC or PAL, in certain embodiments.

Thus, in an interactive optical disc player for reproducing main A/V data and content data of a content disc, a system according to the present invention classifies a MNG file of animation data contained in the content data received from the I-DVD or the content server into a PNG file and a JNG file.

The system then decodes the image data contained in respective files, and reproduces the image data in the form of various animation images by referring to control information contained in the above files, such that the interactive optical disc player can effectively reproduce the animation data to be associated with the main A/V data, in accordance with one or more embodiments.

It should be understood that the programs, modules, processes, methods, and the like, described herein are but an exemplary implementation and are not related, or limited, to any particular computer, apparatus, or computer programming language. Rather, various types of general-purpose computing machines or devices may be used with logic code implerented in accordance with the teachings provided, herein.

Further, the order in which the steps of the present method are performed is purely illustrative in nature. In fact, the steps can be performed in any order or in parallel, unless indicated otherwise by the present disclosure. The method of the present invention may be performed in either hardware, software, or any combination thereof, as those terms are currently known in the art.

In particular, the present method may be carried out by software, firmware, or macrocode operating on a computer or computers of any type. Additionally, software embodying the present invention may comprise computer instructions in any medium (e.g., ROM, RAM, magnetic media, punched tape or card, compact disk (CD), DVD, etc.).

Furthermore, such software may also be in the form of a computer signal embodied in a carrier wave, or accessible through Web pages provided on computers connected to the Internet. Accordingly, the present invention is not limited to any particular platform, unless specifically stated otherwise in the present disclosure.

Thus, methods and systems for managing animation data of an interactive disc are provided. The present invention has been described above with reference to preferred embodiments. However, those skilled in the art will recognize that changes and modifications may be made in these preferred embodiments without departing from the scope of the present invention.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein.

These and various other adaptations and combinations of features of the embodiments disclosed are within the scope of the invention. The invention is defined by the claims and their full scope of equivalents.

## Claims

1. A method for reproducing image data, comprising:
receiving PNG (Portable Network Graphics) file from an enhanced storage medium or a content server, the PNG file comprising an image data preceded by an image header and followed by an image trailer, the image header including frame size information, bit depth information, color type information, compression method information, filter method information, and interface method information;
storing the PNG file in a temporary data storage; and
reproducing the image data based on at least one of information included in the image header, along with an associated audio/video data recorded in the enhanced storage medium.

2. The method of claim 1, wherein the PNG file comprises Critical PNG Chunks, the Critical PNG Chunks further including a palette information.

3. The method of claim 2, wherein the PNG file further comprises Ancillary PNG Chunks, the Ancillary PNG Chunks comprising a transparency information, image gamma information, primary chromaticities information, standard RGB color space information and a physical pixel dimensions information.

4. The method of any of claims 1 to 3, wherein the receiving step includes a step of reading the PNG file and the associated audio/video data from the enhanced storage medium.

5. The method of claim 4, further comprising:
extracting the image header and the image data from the PNG file read from the enhanced storage medium, wherein
the reproducing step includes a step of decoding the image data in response to the information included in the extracted image header.

6. The method of any of claims 1 to 3, wherein the receiving step includes steps of reading the associated audio/video data from the enhanced storage medium and receiving the PNG file from the content server.

7. The method of claim 6, further comprising:
extracting the image header and the image data from the PNG file received from the content server, wherein
the reproducing step includes a step of decoding the image data in response to the information included in the extracted image header.

8. An apparatus for reproducing image data, comprising:
a receiving unit for receiving PNG (Portable Network Graphics) file from an enhanced storage medium or a content server, the PNG file comprising an image data preceded by an image header and followed by an image trailer, the image header including frame size information, bit depth information, color type information, compression method information, filter method information and interface method information;
a data storage for storing the PNG file in a temporary data storage;
a signal processor for reproducing the image data based on at least one of information included in the image header, along with an associated audio/video data recorded in the enhanced storage medium; and
a controller, coupled to the receiving unit, the data storage and the signal processor, to control the reproducing of the image data and the associated audio/video data.

9. The apparatus of claim 8, wherein the PNG file comprises Critical PNG Chunks, the Critical PNG Chunks further including a palette information.

10. The apparatus of claim 9, wherein the PNG file further comprises Ancillary PNG Chunks, the Ancillary PNG Chunks comprising a transparency information, image gamma information, primary chromaticities information, standard RGB color space information and a physical pixel dimensions information.

11. The apparatus of claim 8, wherein the receiving unit receives the PNG file and the associated audio/video data from the enhanced storage medium, the controller extracts the image header and the image data from the PNG file read from the enhanced storage medium, and the signal processor decodes the image data in response to the information included in the extracted image header, according to the control of the controller.

12. The apparatus of claim 8, wherein the receiving unit receives the associated audio/video data from the enhanced storage medium and receives the PNG file from the content server through a network manager, and
wherein the data storage stores the PNG file received through the network manager.

13. The apparatus of claim 12, wherein the controller extracts the image header and the image data from the PNG file received from the content server, and the signal processor decodes the image data in response to the information included in the extracted image header.
